# FASCICULE DE BREVET EUROPEEN

(11) **EP 0 775 377 B1**
(45) Date de publication et mention de la délivrance du brevet: **09.12.1998**
(21) Numéro de dépôt: 95924347.8
(22) Date de dépôt: 07.06.1995
(51) Int. Cl.: H02B 7/08, H02B 1/50

(54) **UNITE DE SERVICE TECHNIQUE**
TECHNISCHE VERSORGUNGSEINHEIT
TECHNICAL SERVICE UNIT

(30) Priorité: 08.06.1994 FR 9406987
(43) Date de publication de la demande: 28.05.1997
(73) Titulaire: Lecreux, Philippe, 27950 Saint-Marcel (FR); Hibon, Bruno, 27950 Saint-Marcel (FR)
(72) Inventeur: Lecreux, Philippe, 27950 Saint-Marcel (FR); Hibon, Bruno, 27950 Saint-Marcel (FR)
(74) Mandataire: Tanguy, Gilbert André
(86) Numéro de dépôt international: FR9500734
(87) Numéro de publication internationale: WO9534113

(56) Documents cités:
- BE-A- 862 876
- CH-A- 682 961
- DE-A- 3 620 349
- DE-U- 9 217 542
- FR-A- 2 681 111

## Description

L'invention se rapporte à une unité de service technique, principalement en rapport avec la fourniture de fluides ou d'énergie (gaz, électricité, eau) et/ou la commande d'une telle fourniture et/ou la mesure des quantités fournies. L'invention peut concerner encore une telle unité comprenant le ou les automates nécessaires au fonctionnement d'une installation urbaine de signalisation comme par exemple la commande d'un ensemble de feux de circulation. L'invention peut concerner aussi une unité de service technique capable de délivrer du courant électrique continu pour permettre de recharger les batteries d'un véhicule à traction électrique. L'invention concerne plus particulièrement une structure de boîtier mobile et escamotable susceptible d'abriter les équipements du service technique considéré.

De nombreux sites sont prévus ou aménagés pour permettre le déroulement de manifestations temporaires nécessitant des raccordements électriques. A titre d'exemples non limitatifs, on peut citer les lieux réservés aux fêtes foraines ou aux marchés, les terrains de camping, les ports de plaisance, les salles d'exposition, les stades et autres complexes sportifs. Dans tous les cas mentionnés ci-dessus, il peut être également souhaitable de disposer d'un réseau de distribution de fluide sous pression, par exemple pneumatique ou hydraulique.

L'édification d'un réseau de distribution d'énergie, notamment électrique, dans de tels lieux, pose des problèmes de sécurité et nécessite une surveillance antivandalisme. En outre, si les bornes de raccordement sont apparentes en grand nombre, elles peuvent constituer une atteinte à l'environnement.

D'autres équipements urbains posent des problèmes voisins, même s'ils ne concernent pas spécifiquement la distribution d'énergie. On peut citer par exemple, les compteurs d'eau, de gaz ou d'électricité placés en extérieur, dans des armoires encombrantes et visibles, devant des immeubles ou monuments. Un autre problème est celui de la prolifération de telles armoires, dans les zones pavillonnaires, devant les clôtures ou les façades des maisons.

En outre, en milieu urbain, il est souhaitable de protéger et dissimuler les armoires techniques de commande renfermant les automates et autres équipements électriques nécessaires au pilotage et à la synchronisation de signaux lumineux (feux tricolores par exemple) régissant la circulation au voisinage d'un carrefour ou d'un site dangereux.

Enfin, en milieu urbain, on souhaite de plus en plus promouvoir les véhicules à moteur électrique. Pour cela, il est nécessaire d'équiper certaines places de stationnement de bornes spéciales permettant la recharge des batteries de tels véhicules. Il faut donc envisager des dispositifs faisant office de distributeurs de courant continu et éventuellement de paremètres. Or, la constitution d'un réseau de distribution de courant continu est difficilement envisageable en raison des investissements énormes qui seraient nécessaires.

L'invention apporte une solution satisfaisante à chacun des problèmes évoqués ci-dessus.

Plus précisément, l'invention concerne une unité de service technique à usage intermittent, du type comportant un caisson de protection présentant une ouverture à sa partie supérieure, abritant au moins un boîtier renfermant des appareils en rapport avec le service technique considéré et des moyens de levage dudit boîtier pour assurer l'élévation du boîtier hors du caisson, en cas de besoin, caractérisée en ce que lesdits moyens de levage comportent deux glissières verticales creuses, fixes, solidaires de deux parois parallèles dudit boîtier, deux coulisseaux se déplaçant respectivement dans ces glissières, ledit boîtier étant rattaché à ces coulisseaux et au moins deux agencements de vérins espacés, respectivement installés entre un point d'appui fixe et un élément de structure lié audit boîtier, en ce que lesdits coulisseaux sont tubulaires et en ce que lesdits agencements de vérins sont installés dans ces coulisseaux tubulaires.

De préférence, les deux glissières sont des profilés à section en U intégrés dans la structure ou la masse dudit caisson et disposés de sorte que leurs faces ouvertes soient en regard l'une de l'autre. Le caisson peut être avantageusement en béton et dans ce cas, lesdits profilés à section en U sont incorporés au coulage dudit béton.

Avec l'agencement de base tel que défini ci-dessus, on dispose d'une place plus importante à l'intérieur du caisson, toutes choses égales par ailleurs et on peut donc loger un ou plusieurs boîtiers relativement importants dans un caisson de relativement faible encombrement. En outre, la plupart des éléments peuvent être montés en usine dans le caisson même et transportés ainsi sur le site. Il ne reste plus alors qu'à placer le caisson dans une excavation au fond de laquelle on a fait arriver les câbles électriques et /ou canalisations nécessaires. De préférence, le caisson est enterré de façon que son ouverture, masquée par un couvercle, affleure au niveau du sol. Le déverrouillage du couvercle, entraîne la remontée automatique du boîtier, pour la fourniture d'énergie ou la maintenance, pour relever un compteur, ou pour toute autre opération en rapport avec le service technique considéré.

Pour l'application particulière de la recharge des accumulateurs des voitures électriques, l'invention est en outre principalement remarquable en ce qu'elle comporte au moins un boîtier technique du genre mentionné ci-dessus et une borne de service agencée à côté du boîtier technique dans ledit caisson de protection, ladite borne de service étant couplée à un agencement de levage particulier permettant de l'extraire du caisson indépendamment dudit boîtier technique.

Dans ce cas, le boîtier technique peut avantageusement être associé à un système de levage tel que décrit ci-dessus bien que tout autre système susceptible d'être monté dans un caisson de protection puisse convenir. Le boîtier technique peut notamment renfermer un redresseur alimenté par un réseau de distribution de courant alternatif souterrain. La borne de service peut renfermer quant à elle au moins une prise de distribution de courant continu, reliée à la sortie du redresseur et éventuellement des moyens de réception de télécommande et/ou des moyens de péage. La levée de la borne de service peut ainsi être commandée par tout usager de véhicule électrique (et seulement par l'un d'eux) muni d'un boîtier de télécommande adapté. En dehors d'une utilisation en stationnement-recharge, la borne peut être rentrée dans le caisson de protection et devenir inaccessible, au bord de la chaussée. Dans ce contexte précis, l'invention permet d'implanter des redresseurs au voisinage d'emplacements de stationnement sélectionnés, typiquement un redresseur à chaque emplacement de stationnement.

L'invention sera mieux comprise et d'autres avantages de celle-ci apparaîtront à la lumière de la description qui va suivre de plusieurs modes de réalisation d'une unité de service technique conforme à son principe, donnée uniquement à titre d'exemple et faite en référence aux dessins annexés dans lesquels :
- la figure 1 est une vue schématique en élévation et en coupe d'une unité de service technique conforme au principe de l'invention, le boîtier étant représenté à l'intérieur du caisson de protection ;
- la figure 2 est une coupe II - II de la figure 1 ;
- la figure 3 est une vue analogue à la figure 1, le boîtier étant à l'extérieur du caisson de protection ;
- la figure 4 est une coupe IV - IV de la figure 3 ;
- la figure 5 est une vue analogue à la figure 4 illustrant une variante ;
- la figure 6 est une vue schématique en élévation et en coupe d'une autre unité de service technique conforme à l'invention, plus particulièrement destinée au ravitaillement des voitures électriques, le système étant représenté avec la borne de service en position d'utilisation ;
- la figure 7 est une coupe VII -VII de la figure 6 ; et
- la figure 8 est une coupe VIII - VIII de la figure 6, le boîtier de service étant représenté dans une position accessible, hors du caisson de protection.

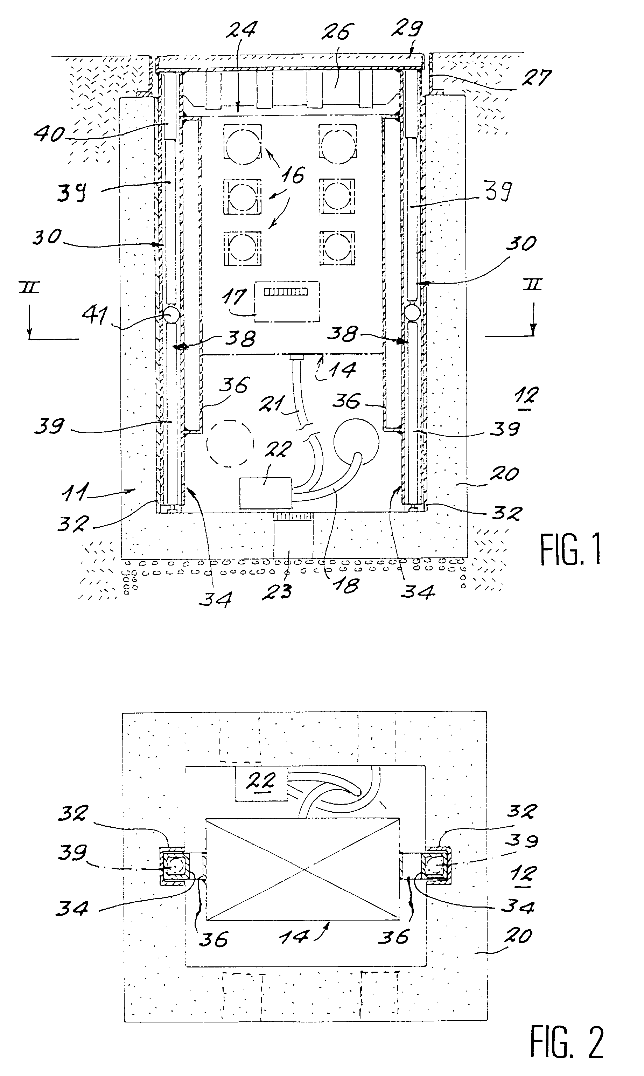

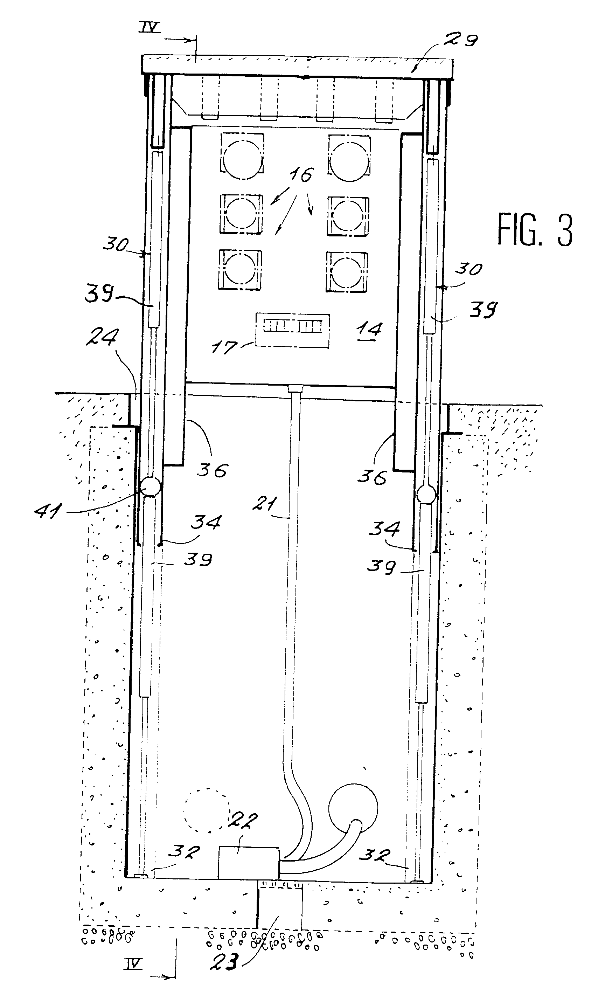

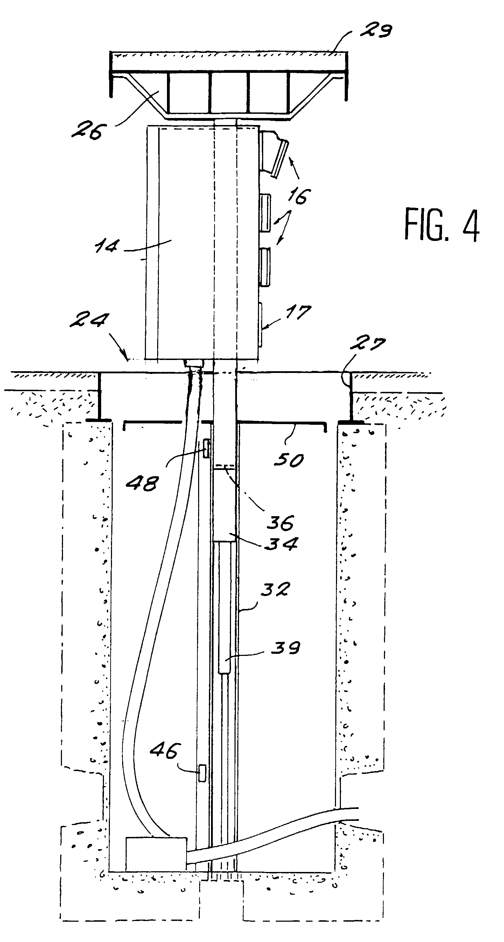

En se reportant plus particulièrement aux figures 1 à 4, on a représenté une unité de service 11 à usage intermittent, c'est-à-dire pouvant être enfouie dans le sol 12 (figures 1 et 2) ou, au contraire, être accessible au-dessus du sol( figures 3 et 4) pour un usage, un contrôle ou une mesure de consommation. Plus particulièrement, dans l'exemple décrit, l'unité de service comporte au moins un boîtier 14 comportant ou renfermant des appareils en rapport avec le service technique considéré, en l'occurrence ici, notamment, des prises de courant 16 (monophasées et triphasées), des fusibles ou des disjoncteurs (non représentés) et un compteur électrique 17. Les circuits de distribution d'énergie électrique ainsi définis sont reliés à un réseau électrique souterrain 18. Ce réseau est accessible au fond d'un caisson de protection 20, en béton, enterré dans le sol et abritant le boîtier. Le réseau est connecté au boîtier via un toron électrique flexible 21 et une boîte de dérivation 22 installée au fond du caisson 20. La forme générale du caisson est un parallélépipède rectangle, il comporte un trou 23 dans sa paroi de fond, muni d'une grille pour l'évacuation des eaux de pluie. Il comporte aussi une ouverture horizontale 24, rectangulaire, à sa partie supérieure. Il est enterré pour que cette ouverture affleure au niveau du sol, en étant obturée par un couvercle 26 en période de non utilisation. Ce couvercle s'inscrit dans un cadre métallique 27 fixé à la partie supérieure du caisson 20. Avantageusement, la face extérieure du couvercle 26 est conformée (grâce à un cadre métallique) en une sorte de réceptacle plat 29 susceptible de recevoir un matériau ou une garniture (bitume, gazon, dalles de pierre ou de ciment, etc...) en rapport avec l'environnement immédiat du caisson. Ce dernier est en outre équipé de moyens de levage 30 pour assurer l'extraction automatique du boîtier 14 hors du caisson, en cas de besoin.

Selon une caractéristique avantageuse de l'invention, ces moyens de levage comportent deux glissières creuses 32, verticales, fixes, solidaires de deux parois parallèles intérieures du caisson et deux coulisseaux 34, ici tubulaires à section carrée, montés pour coulisser verticalement dans les glissières, respectivement. Le boîtier 14 est rattaché à ces coulisseaux 34 par des pièces de liaison latérales 36. Le couvercle 26 est lui-même fixé (par exemple soudé) aux extrémités supérieures des coulisseaux 34. Ainsi le boîtier 14 est fixé au couvercle par l'intermédiaire des coulisseaux 34. Le système est complété par deux agencements de vérins 38 espacés, chacun étant installé entre un point d'appui fixe (ici la base du caisson 20) et un élément de structure lié au boîtier, en l'occurrence ici le couvercle 26. Chaque agencement de vérins comporte ici deux vérins 39 montés bout à bout et une entretoise 40 de compensation de hauteur. Bien entendu, chaque agencement 30 pourrait être constitué d'un seul vérin ou au contraire de plus de deux vérins montés de la même façon. Avantageusement lesdits agencements de vérins 38 sont installés dans les coulisseaux tubulaires 34 qui contribuent à les maintenir en position verticale. Les deux vérins d'un même agencement sont connectés l'un à l'autre par une pièce de liaison sphérique 41, assurant un bon guidage à l'intérieur du coulisseau. Plus précisément, les deux glissières 32 sont constituées par des profilés à section en U, intégrées dans la structure ou la masse du béton et disposées de sorte que leurs faces ouvertes soient en regard l'une de l'autre (figure 2). Dans le cas d'un caisson en béton, lesdits profilés à section en U sont incorporés en tant que parties de coffrage, au coulage du béton. Les vérins 39 sont ici des vérins à gaz qui se déploient automatiquement lorsque le couvercle 26 est libéré. Pour ce faire, le dispositif est équipé d'une serrure basse 46 et d'une serrure haute 48 placées à des niveaux différents dans le caisson, par exemple le long de l'une des glissières 32. Ces serrures coopèrent avec une tige de fermeture verticale (non visible sur les dessins) manoeuvrable de l'extérieur, pour l'immobilisation des parties mobiles du système dans deux positions possibles, l'une représentée sur la figure 1 où le couvercle 26 s'inscrit dans le cadre 27 et où par conséquent le boîtier est entièrement rentré à l'intérieur du caisson de protection et l'autre, représentée sur les figures 3 et 4 où le boîtier est totalement ressorti au-dessus du caisson et se trouve donc accessible pour un utilisateur. Dans cette position, une plaque d'obturation 50 solidaire des moyens de levage, située sous le boîtier 14, vient se positionner au voisinage de l'ouverture 24 du caisson 20 pour empêcher que des corps étrangers tombent dans le caisson.

Ainsi, en position de non-utilisation, seul le couvercle 26 est apparent ; il n'est remarquable que par l'émergence du cadre 27. La fermeture de la serrure basse 46 maintient les vérins à gaz 39 à l'état contracté. L'ouverture de cette serrure suffit à libérer le boîtier qui s'élève automatiquement à vitesse réduite jusqu'à la position illustrée aux figures 3 et 4, grâce au déploiement des vérins à gaz. Après la fermeture de la serrure haute qui stabilise le boîtier en position d'utilisation, les équipements qu'il contient peuvent être mis en service. Pour remettre le boîtier en position de non utilisation, il suffit d'ouvrir la serrure haute et d'appuyer sur le boîtier pour le faire rentrer à vitesse réduite, contre la force d'extension des vérins, dans le caisson 20 avant de fermer la serrure basse 46.

Il résulte clairement de la description qui précède que le système qui vient d'être décrit peut servir à bien d'autres usages que la simple fourniture d'électricité. Le boîtier peut permettre la fourniture de fluide gazeux ou liquide, s'il est équipé des vannes de raccordement nécessaires. Il peut aussi permettre la commande de fourniture de telles matières premières. L'armoire peut abriter un compteur d'électricité, un compteur de gaz ou un compteur d'eau ou plusieurs d'entre eux. De cette façon, il n'est plus nécessaire de pénétrer dans les locaux desservis pour relever les compteurs et seules les personnes dûment chargées des opérations de maintenance ou de relevage des compteurs sont en possession des clés permettant de faire surgir le boîtier du caisson. Le boîtier peut aussi renfermer les automates d'une installation de commande de feux de signalisation d'un carrefour. Dans ce cas, le boîtier n'est accessible que par le personnel de maintenance ou les agents de la circulation.

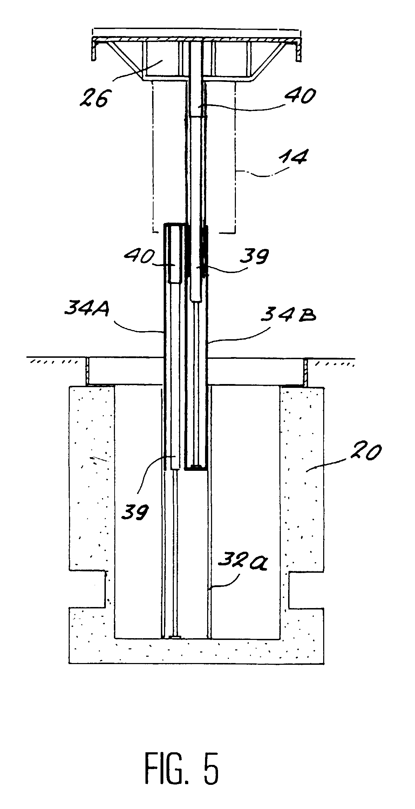

La figure 5 illustre une variante dans laquelle les éléments analogues portent les mêmes références numériques. Selon cette variante, chaque glissière 32a, plus large que dans le mode de réalisation précédemment décrit, abrite un ensemble de deux coulisseaux 34A, 34B accolés l'un à l'autre, par exemple soudés et abritant respectivement deux vérins 39, l'un monté entre un point d'appui fixe en bas du caisson et un point supérieur dudit ensemble de coulisseaux et l'autre monté entre un point inférieur dudit ensemble de coulisseaux et ledit élément de structure lié audit boîtier, c'est-à-dire le couvercle 26. Dans l'exemple, chaque vérin est associé à une entretoise de compensation de hauteur 40.

Ce montage permet une plus grande amplitude de déplacement du boîtier, avec un encombrement réduit en hauteur, toutes choses égales par ailleurs.

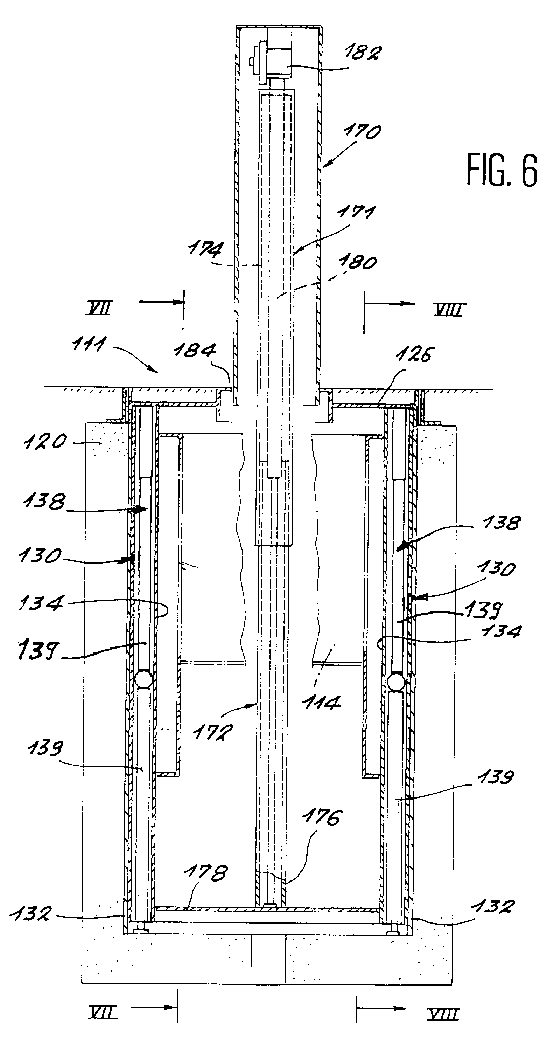

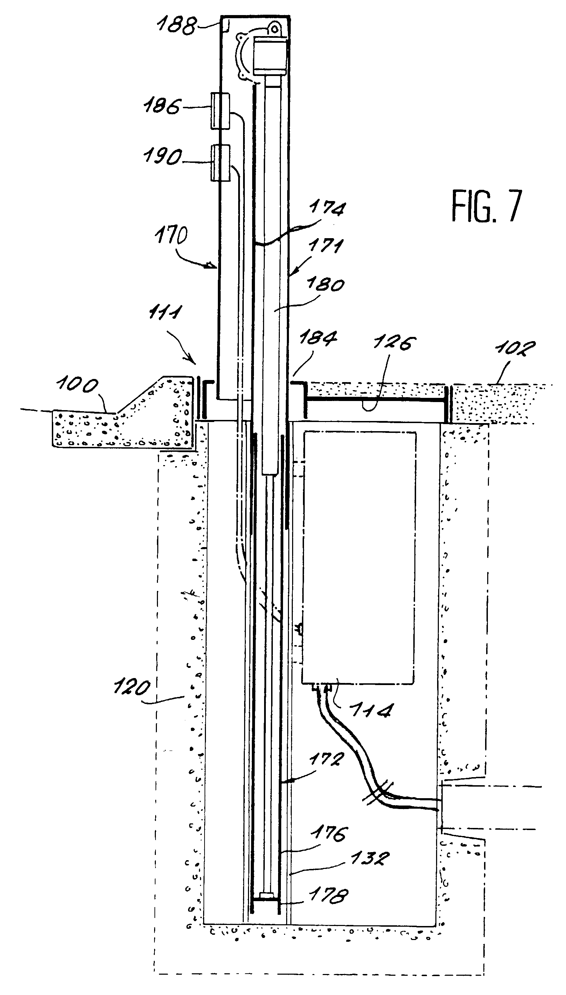

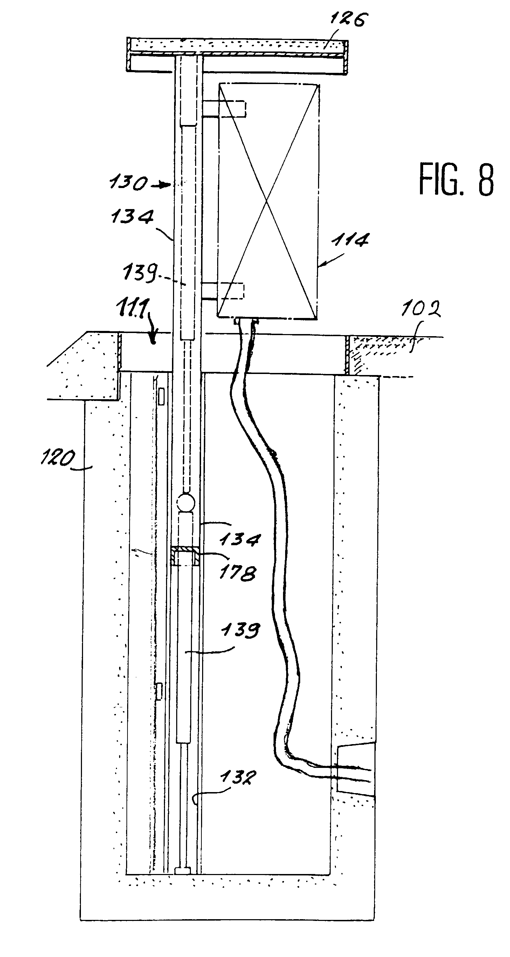

On va maintenant décrire en référence aux figures 6 à 8, une autre unité de service 111 conforme à l'invention plus particulièrement destinée à la foumiture de courant continu pour véhicules électriques. Une telle unité est par exemple destinée à être implantée le long d'une chaussée urbaine 100, au bord d'un trottoir 102. Dans ce mode de réalisation, les éléments de structure analogues à ceux des modes de réalisation précédents portent les mêmes références numériques augmentées de 100. Ils ne seront pas décrits en détail. On retrouve donc un caisson de protection 120 en béton, un boîtier technique 114 à l'intérieur de ce caisson, un couvercle 126 fermant l'ouverture supérieure du caisson, au niveau du sol et des moyens de levage 130 du boîtier 114, comprenant des glissières 132 à profil en U intégrées au béton, des coulisseaux 134 se déplaçant verticalement dans ces glissières et des agencements de vérins 138 installés dans les coulisseaux et prenant appui entre le fond du caisson et le couvercle 126. Ces glissières sont fixées latéralement au boîtier 114 et leurs extrémités supérieures sont soudées au couvercle 126.

Cependant, ce mode de réalisation est remarquable par le fait qu'il comporte en outre une borne de service 170 couplée à son propre agencement de levage 171, permettant de l'extraire du caisson de protection 120 indépendamment du boîtier technique 114. Plus précisément, la borne de service 170 est fixée à un système de guidage vertical à structure télescopique 172, formé d'au moins deux tubes de sections différentes coulissant l'un dans l'autre. L'un des tubes, ici le tube extérieur 174 est fixé longitudinalement à l'intérieur de la borne de service. Il est soudé le long de la face interne du boîtier de celle-ci. L'autre tube du système de guidage, ici le tube intérieur 176 est fixé par son extrémité inférieure à une traverse horizontale 178. Les extrémités de cette traverse sont respectivement fixées aux extrémités inférieures des coulisseaux 134 des moyens de levage du boîtier technique 114.

Le système de guidage vertical 172 abrite un vérin 180 qui est ici un vérin à vis commandé par un moteur électrique 182 installé à la partie supérieure de la borne de service. Chaque partie du vérin est solidaire de l'un des tubes du système de guidage vertical à structure télescopique. Plus particulièrement, le corps du vérin est solidaire du tube extérieur 174 tandis que l'extrémité de la tige du vérin est fixée à l'extrémité inférieure du tube intérieur 176 et à la traverse horizontale 178.

Pour pouvoir s'élever indépendamment du boîtier technique, la dite borne de service 170 est montée en coulissement vertical et guidée dans une fenêtre horizontale 184 pratiquée dans le couvercle 126 qui vient s'adapter sur l'ouverture du caisson 120.

Le boîtier technique 114 comporte au moins un redresseur alimenté par un réseau de distribution de courant alternatif classique, accessible à l'intérieur du caisson. Le boîtier abrite également tous les équipements de commande et de sécurité nécessaires à la mise en oeuvre d'un tel redresseur. La borne de service comporte quant à elle au moins une prise de distribution de courant continu 186 connectée pour être alimentée par le redresseur du boîtier technique. Avantageusement, la borne de service comporte aussi des moyens de détection de télécommande 188 associés à des moyens de pilotage du moteur du vérin. Elle comporte aussi des moyens de péage 190, par pièces ou carte bancaire.

Il ressort clairement de la description qui précède que la borne de service peut être extraite du caisson 120 sous la commande d'un usager, sans que le boîtier technique 114 et le couvercle 126 ne se relèvent. Si la place de stationnement n'est pas occupée par une voiture électrique dont la batterie nécessite d'être rechargée, la borne de service est rétractée à l'intérieur du caisson 120 et protégée contre les fausses manoeuvres de véhicules et le vandalisme. En revanche, lorsqu'une intervention technique est nécessaire, le boîtier technique est relevé dans les mêmes conditions que décrit ci-dessus entraînant aussi l'extraction de la borne de service puisque la tige du vérin à vis 180 est solidaire de la traverse horizontale 178 elle-même fixée aux extrémités inférieures des coulisseaux 134.

## Revendications

1. Unité de service technique à usage intermittent, du type comportant un caisson de protection (20) présentant une ouverture à sa partie supérieure, abritant au moins un boîtier (14) renfermant des appareils en rapport avec le service technique considéré et des moyens de levage (30) dudit boîtier pour assurer l'élévation dudit boîtier hors du caisson en cas de besoin, caractérisée en ce que lesdits moyens de levage comportent deux glissières verticales (32) creuses, fixes, solidaires de deux parois parallèles du caisson, deux coulisseaux (34) se déplaçant respectivement dans ces glissières, ledit boîtier étant rattaché à ces coulisseaux, en ce qu'ils comportent deux agencements de vérins (38) espacés, respectivement installés entre un point fixe et un élément de structure (26) lié audit boîtier, en ce que lesdits coulisseaux (34) sont tubulaires et en ce que lesdits agencements de vérins (30) sont installés dans ces coulisseaux tubulaires.

2. Unité de service selon la revendication 1, caractérisée en ce que les deux glissières (34) sont des profilés à section en U intégrés dans la structure ou la masse dudit caisson et disposés de sorte que leurs faces ouvertes soient en regard l'une de l'autre.

3. Unité de service selon la revendication 2, caractérisée en ce que ledit caisson (20) étant en béton, lesdits profilés à section en U y sont incorporés au coulage dudit béton.

4. Unité de service selon l'une des revendications précédentes, caractérisée en ce que ledit élément de structure forme un couvercle (26) venant s'adapter sur l'ouverture dudit caisson.

5. Unité de service selon la revendication 4, caractérisée en ce qu'un tel boîtier (14) est fixé audit couvercle.

6. Unité de service selon la revendication 4 ou 5, caractérisée en ce que la face extérieure du couvercle (26) est conformée en un réceptacle plat (29) susceptible de recevoir un matériau ou une garniture en conformité avec l'environnement immédiat du caisson.

7. Unité de service selon l'une des revendications 1 à 6, caractérisée en ce que chaque coulisseau abrite au moins deux vérins (39) connectés bout à bout par une pièce de liaison (41) faisant office de guidage interne, par exemple de forme sphérique.

8. Unité de service selon l'une des revendications 1 à 6, caractérisée en ce que chaque glissière (32a) précitée abrite un ensemble de deux coulisseaux (34A, 34B) accolés l'un à l'autre et abritant respectivement deux vérins (39), l'un des vérins étant monté entre un point d'appui fixe et un point supérieur dudit ensemble de coulisseaux et l'autre vérin étant monté entre un point inférieur dudit ensemble de coulisseaux et ledit élément de structure (26) lié audit boîtier.

9. Unité de service selon l'une des revendications précédentes, caractérisée en ce qu'elle comporte au moins un boîtier technique (114) et une borne de service (170), agencés côte à côte dans ledit caisson de protection (120), ladite borne de service étant couplée à un agencement de levage (171) particulier permettant de l'extraire dudit caisson indépendamment dudit boîtier technique.

10. Unité de service selon la revendication 9, caractérisée en ce que ladite borne de service est fixée à un système de guidage vertical à structure télescopique formé d'au moins deux tubes (174, 176) de sections différentes coulissant l'un dans l'autre, l'un des tubes étant fixé longitudinalement à l'intérieur de ladite borne de service.

11. Unité de service selon la revendication 10, caractérisée en ce que l'autre tube (176) du système de guidage est fixé par son extrémité inférieure à une traverse horizontale (178) et en ce que les extrémités de cette traverse sont respectivement fixées aux coulisseaux (134) des moyens de levage précités

12. Unité de service selon la revendication 10 ou 11, caractérisée en ce que ledit système de guidage vertical abrite un vérin (180), de préférence un vérin à vis commandé par un moteur électrique (182) installé dans ladite borne de service, chaque partie du vérin étant solidaire d'un tube dudit système de guidage vertical à structure télescopique.

13. Unité de service selon l'une des revendications 9 à 12 et la revendication 5, caractérisée en ce que ladite borne de service est montée en coulissement vertical dans une fenêtre horizontale (184) du couvercle (126) précité venant s'adapter sur l'ouverture dudit caisson.

14. Unité de service selon l'une des revendications 9 à 13, caractérisée en ce que ladite borne de service comporte au moins une prise de distribution de courant électrique (186) et éventuellement des moyens de télécommande (188) et/ou des moyens de péage (190).

15. Unité de service selon la revendication 14, caractérisée en ce que ledit boîtier technique (114) comporte au moins un redresseur alimenté par un réseau de distribution de courant alternatif accessible à l'intérieur dudit caisson et en ce que ledit redresseur est connecté pour alimenter ladite prise de distribution de courant continu (186) de ladite borne de service.

## Claims

1. Technical service unit for intermittent usage, of the type having a protective casing (20) with an opening at its top, enclosing at least one housing (14) containing appliances relating to the technical service in question, and means (30) of lifting the said housing in order to raise the said housing out of the casing if needed, characterised in that the said lifting means include two fixed hollow vertical runners (32), fixed to two parallel walls of the casing, two slides (34) moving respectively in these runners, the said housing being attached to these slides, in that they include two arrangements of rams (38) spaced apart, respectively installed between a fixed part and a structural element (26) connected to the said housing, in that the said slides (34) are tubular and in that the said arrangements of rams (30) are installed in these tubular slides.

2. Service unit according to Claim 1, characterised in that the two runners (34) are profiled lengths with a U-shaped cross section integrated into the structure or mass of the said casing and disposed so that their open faces are opposite each other.

3. Service unit according to Claim 2, characterised in that, the said casing (20) being made of concrete, the said profiled lengths with a U-shaped cross section are incorporated therein when the said concrete is poured.

4. Service unit according to one of the preceding claims, characterised in that the said structural element forms a cover (26) fitting on the opening in the said casing.

5. Service unit according to Claim 4, characterised in that such a housing (14) is fixed to the said cover.

6. Service unit according to Claim 4 or 5, characterised in that the external face of the cover (26) is shaped as a flat receptacle (29) able to receive a material or lining in conformity with the immediate environment of the casing.

7. Service unit according to one of Claims 1 to 6, characterised in that each slide encloses at least two rams (39) connected end to end by a connecting piece (41) serving for internal guidance, for example spherical in shape.

8. Service unit according to one of Claims 1 to 6, characterised in that each aforementioned runner (32a) encloses a set of two slides (34A, 34B) abutting each other and enclosing respectively two rams (39), one of the rams being mounted between a fixed abutment point and a high point on the said set of slides, and the other ram being mounted between a low point on the said set of slides and the said structural element (26) connected to the said housing.

9. Service unit according to one of the preceding claims, characterised in that it has at least one technical housing (114) and one service terminal (170), arranged side by side in the said protective casing (120), the said service terminal being coupled to a special lifting arrangement (171) enabling it to be extracted from the said casing independently of the said technical housing.

10. Service unit according to Claim 9, characterised in that the said service terminal is fixed to a vertical guidance system with a telescopic structure formed by at least two tubes (174, 176) with different cross sections sliding one in the other, one of the tubes being fixed longitudinally inside the said service terminal.

11. Service unit according to Claim 10, characterised in that the other tube (176) of the guidance system is fixed by its bottom end to a horizontal cross-member (178) and in that the ends of this cross-member are respectively fixed to the slides (134) of the aforementioned lifting means.

12. Service unit according to Claim 10 or 11, characterised in that the said vertical guidance system encloses a ram (180), preferably a screw ram controlled by an electric motor (182) installed in the said service terminal, each part of the ram being fixed to a tube of the said vertical guidance system with a telescopic structure.

13. Service unit according to one of Claims 9 to 12 and Claim 5, characterised in that the said service terminal is mounted so as to slide vertically in a horizontal aperture (184) in the aforementioned cover (126) fitting on the opening in the said casing.

14. Service unit according to one of Claims 9 to 13, characterised in that the said service terminal has at least one electric current distribution socket (186) and optionally remote-control means (188) and/or payment means (190).

15. Service unit according to Claim 14, characterised in that the said technical housing (114) has at least one rectifier fed by an alternating current distribution system accessible inside the said casing and in that the said rectifier is connected so as to supply the said DC distribution socket (186) on the said service terminal.

## Patentansprüche

1. Technische Versorgungseinheit für intermittierenden Gebrauch, bestehend aus einem Schutzkasten (20), der an seinem oberen Teil eine Öffnung aufweist und wenigstens ein Gehäuse (14) umschließt, das Geräte bzgl. der in Betracht kommenden technischen Versorgung und Hubeinrichtungen (30) des Gehäuses zum erforderlichenfalls Heben des Gehäuses aus dem Kasten enthält,
**dadurch gekennzeichnet, daß**
die Hubeinrichtungen zwei vertikale, hohle, feste, mit zwei parallelen Wänden des Kastens verbundene Laufschienen (32) und zwei sich bzgl. der Laufschienen verschiebende Schlitten (34) aufweist, wobei das Gehäuse an den Schlitten befestigt ist, daß sie zwei beabstandete, jeweils zwischen einem festen Punkt und einem mit dem Gehäuse verbundenen Rahmenelement installierte Stellglieder (38) aufweisen, daß die Schlitten (34) rohrförmig sind, und daß die Stellglieder (30) in den rohrförmigen Schlitten installiert sind.

2. Technische Versorgungseinheit nach Anspruch 1,
**dadurch gekennzeichnet, daß**
die beiden Laufschienen (34) Profile mit U-Querschnitt sind, die in den Rahmen oder die Masse des Kastens integriert und derart angeordnet sind, daß ihre offenen Seiten einander zugewandt sind.

3. Technische Versorgungseinheit nach Anspruch 2,
**dadurch gekennzeichnet, daß**
der Kasten aus Beton (20) besteht, und daß die Profile mit U-Querschnitt beim Gießen des Betons eingesetzt sind.

4. Technische Versorgungseinheit nach einem der vorhergehenden Ansprüche,
**dadurch gekennzeichnet, daß**
das Rahmenelement einen Deckel (26) bildet, der auf die Öffnung des Kastens paßt.

5. Technische Versorgungseinheit nach Anspruch 4,
**dadurch gekennzeichnet, daß**
daß das Gehäuse (14) am Deckel befestigt ist.

6. Technische Versorgungseinheit nach Anspruch 4 oder 5,
**dadurch gekennzeichnet, daß**
die Außenseite des Deckels (46) als flache Aufnahme (29) zur Aufnahme eines Materials oder einer Abdichtung entsprechend der unmittelbaren Umgebung des Kastens ausgebildet ist.

7. Technische Versorgungseinheit nach einem der Ansprüche 1 - 6,
**dadurch gekennzeichnet, daß**
jeder Schlitten wenigstens zwei Stellglieder (39) aufnimmt, die durch ein Verbindungsstück (41) endweise verbunden sind, das als innere Führung, z.B. in Kugelform, dient.

8. Technische Versorgungseinheit nach einem der Ansprüche 1 - 6,
**dadurch gekennzeichnet, daß**
jede vorgenannte Laufschiene (32a) eine Anordnung aus zwei Schlitten (34A, 34B) aufnimmt, die miteinander gekuppelt sind und jeweils zwei Stellglieder (39) aufnehmen, wobei eines der Stellglieder zwischen einem festen Abstützpunkt und einem oberen Punkt der Schlittenanordnung und das andere Stellglied zwischen einem unteren Punkt der Schlittenanordnung und dem Rahmenelement (26) befestigt ist, das mit dem Gehäuse verbunden ist.

9. Technische Versorgungseinheit nach einem der vorhergehenden Ansprüche,
**dadurch gekennzeichnet, daß**
sie wenigstens ein Technikgehäuse (114) und einen Versorgungsanschluß (170) aufweist, die nebeneinander im Schutzkasten (120) betätigt werden, wobei der Versorgungsanschluß mit einer Hubeinrichtung (171) gekuppelt ist, die es insbesondere ermöglicht, ihn unabhängig vom Technikgehäuse aus dem Kasten auszufahren.

10. Technische Versorgungseinheit nach Anspruch 9,
**dadurch gekennzeichnet, daß**
der Versorgungsanschluß an einem vertikalen Führungssystem mit Teleskopaufbau befestigt ist, das aus wenigstens zwei Rohren (174, 176) mit unterschiedlichen Querschnitten gebildet ist, die ineinander gleiten, wobei eines der Rohre in Längsrichtung innerhalb des Versorgungsanschlusses befestigt ist.

11. Technische Versorgungseinheit nach Anspruch 10,
**dadurch gekennzeichnet, daß**
das andere Rohr (176) des Führungssystems an seinem unteren Ende an einer horizontalen Traverse (178) befestigt ist, und daß die Enden der Traverse jeweils an den Schlitten (134) der vorgenannten Hubeinrichtungen befestigt sind.

12. Technische Versorgungseinheit nach Anspruch 10 oder 11,
**dadurch gekennzeichnet, daß**
das vertikale Führungssystem ein Stellglied (180), vorzugsweise eine von einem Elektromotor (182) gesteuerte Schraubenwinde aufweist, die im Versorungsanschluß installiert ist, wobei jeder Abschnitte des Stellglieds mit einem Rohr des vertikalen Führungssystems mit Teleskopaufbau verbunden ist.

13. Technische Versorgungseinheit nach einem der Ansprüche 9 - 12 und Anspruch 5,
**dadurch gekennzeichnet, daß**
der Versorgungsanschluß vertikal verschiebbar in einem horizontalen Fenster (184) des vorgenannten Deckels (126), der die Öffnung des Kastens verschließt, angeordnet ist.

14. Technische Versorgungseinheit nach einem der Ansprüche 9 - 13,
**dadurch gekennzeichnet, daß**
der Versorgungsanschluß wenigstens eine Verteilersteckdose (186) für elektrischen Strom und ggf. Fernsteuereinrichtungen (188) und/oder Straßenbenutzungsgebühreneinrichtungen (190) aufweist.

15. Technische Versorgungseinheit nach Anspruch 14,
**dadurch gekennzeichnet, daß**
das Technikgehäuse (114) wenigstens einen von einem Wechselstrom-Verteilernetz gespeisten Gleichrichter aufweist, der innerhalb des Kastens zugänglich ist, und daß der Gleichrichter zum Speisen der Gleichstromverteilersteckdose (186) des Versorgungsanschlusses geschaltet ist.
